Europäisches Patentamt

European Patent Office

Office européen des brevets

(19)

(11) **EP 1 139 619 A1**

(12) **EUROPEAN PATENT APPLICATION**

(43) Date of publication:
**04.10.2001 Bulletin 2001/40**

(51) Int Cl.7: **H04L 25/02**

(21) Application number: **00311162.2**

(22) Date of filing: **14.12.2000**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **31.03.2000 EP 00106914**

(71) Applicant: **LUCENT TECHNOLOGIES INC.**
**Murray Hill, New Jersey 07974-0636 (US)**

(72) Inventors:
- **Dittrich, Andreas**
  **67729 Sippersfeld (DE)**
- **Urbansky, Ralph Steffen, Prof. Dr.**
  **Kaiserslautern 67663 (DE)**
- **Sauer-Gerff, Wolfgang Emil, Dr.**
  **67661 Kaiserslautern (DE)**

(74) Representative: **Williams, David John et al**
**Page White & Farrer,**
**54 Doughty Street**
**London WC1N 2LS (GB)**

(54) **Channel estimation using a probability mapping table**

(57)    The invention relates to an estimation apparatus of a receiving device for estimating the transmission operation of a transmission channel, in which case the transmission channel is subject to interference, and in which the analogue data (5) received from the transmission channel is assigned an estimator sequence (â) of digital data values, in which the estimator apparatus produces at least one estimation sequence (â), in which both characteristics of the transmission channel and characteristics of the receiver are included, in order in this way to improve the reception characteristics in general and, in particular, the bit error rate of the estimation sequence (â).

EP 1 139 619 A1

**Description**

The invention relates to an estimation apparatus for estimating the transmission operation of a transmission channel for digital data, in which case the transmission channel is or may be subject to interference, and to a receiver and a system for transmitting data using such an estimation apparatus.

Optical long-distance communications systems with transmission rates of 10 Gbit/s or more and which use standard monomode optical fibres, erbium-doped fibre amplifiers and noncoherent optical receivers, are adversely affected by nonlinear pulse dispersion and signal-dependent non-Gaussian noise. If receiver circuits corresponding to the prior art are used here, losses occur with regard to the range, the data rate or the error rate. This is caused by the square-function characteristic of the optical/electrical transducer and a number of physical phenomena such as chromatic dispersion, polarization-mode dispersion, the nonlinear Kerr effect, chirp, extinction ratio, self-phase modulation or noise resulting from spontaneous emission, see, for example, Agrawal, G.P. in Fiber-Optic Communication Systems. Second Edition, New York: John Wiley & Sons, Inc., 1997.

The wide range of effects, some of which vary with time, leads on the one hand to the impossibility of producing a closed a priori description of the behaviour of the resultant electrical channel and of the resultant noise. On the other, this results in a nonlinear transmission channel which varies with time and is subject to memory and which has signal-dependent noise with an unknown likelihood density, which must be estimated while data transmission is taking place.

In addition, problems occur in the provision of suitable receiver circuits for data rates of 10 Gbit/s or more. Furthermore, some digital devices operate in such a way that an analog/digital transducer (ADC) is required for these sampling frequencies. Such components are not prior art and at the moment can be produced only if very poor resolution is accepted, with further static and dynamic nonilinearities, that is to say nonlinearities which are dependent on previous samples.

Since virtually distortion-free transmission can be assumed at data rates of less than 2.5 Gbit/s in optical long-distance systems, receiver circuits comprising a low-pass filter, automatic gain control and a threshold-value decision maker are regarded as prior art, by means of which the required bit error rate of less than $10^{-12}$ is achieved. If the data rate on these optical paths is increased, then, however, such arrangements do not take account of the pulse dispersion effects described initially and which now occur. The error rate can then well exceed the permissible limit, depending on a large number of influences, as a result of which the connection will fail at times or entirely. Alternatively, error-correcting coding would have to be provided, with the usable data rate thus being reduced or the distance being shortened.

Furthermore, approaches are known for compensating for some of the effects by means of optical equalizers, see Heismann, F. et al. in Automatic Compensation of First-Order Polarization Mode Dispersion in a 10 Gb/s Transmission System. Proc. of ECOC'98, pages 529-530, Madrid, 1998. A first disadvantage is that the active optical components required to do this represent a considerable cost factor and, secondly, the signal-theory causes of the problems resulting from this can be only partially solved, and only in comparatively good conditions. The latter also applies to the adaptive electrical filter approach (linear feed forward equalizer). This is because, firstly, this generally increases the noise level and, secondly, it can remove distortion only from linear channels or, in some cases, slightly nonlinear channels.

The structure of the decision feedback amplifier which is known from Kasturia, S., Winters, J.H. in Techniques for High-Speed Implementation of Nonlinear Cancellation. IEEE Journal on Selected Areas in Communications, Vol. 9, pages 711-717, 1991, is also used for this purpose. This interference compensation principle is, however, fundamentally lossy, and leads to error propagation. Furthermore, the achievable error rate is always dependent on the decision time within the bit interval.

The theory behind the receiver for nonlinear channels with memory, which makes decisions on the basis of minimum error likelihood, is discussed in the literature, see Benedetto, S., Biglieri E., Castellani, V. in Digital Transmission Theory, New Jersey, Prentice-Hall, 1987. This solution approach relates to a probabilistic estimator for the transmitted bit sequence, which requires a priori knowledge of the signal forms of the nonlinear channel not subject to interference, as well as the conditional likelihoods of the interference. The above statements have shown, however, that neither is known.

With regard to analogue/digital transducers, known arrangements already exist which comprise a nonlinear instantaneous function, the ADC and a digital correction apparatus, see DE 44 09 063 C1. Since these arrangements are used only to compensate for static effects (for example to increase the drive range), the reaction to dynamic changes of channel characteristics or interference is extremely unsatisfactory. Furthermore, such systems require a fast ADC which, as a result of the problems explained, leads to a further adverse effect on the resultant transmission channel.

The invention is based on the object of reducing the problems described above and, in particular, of providing an improved estimation apparatus for estimating the transmission operation of a transmission channel for digital data which is subject to inference, as well as a receiver and a system for transmitting data using such an estimation apparatus.

This object is achieved by an estimation apparatus having the features of Claim 1, by a receiver having the feature of Claim 12, and by a system for transmitting data having the features of Claim 14.

In a particularly advantageous manner, the estimation apparatus according to the invention is used to produce at least one estimation sequence which includes characteristics not only of the transmission channel but also of the conversion device, and this results in an improvement in the bit error rate of the overall transmission path comprising the transmission channel and the receiving device.

It is furthermore advantageous to digital/analogue convert the analogue input signal and to assign a value set from a metrics table to the digital/analogue converted value since, in this case, random influences occurring on the transmission path can be taken into account using the values from the metrics table.

Those effects of the transmission path which are subject to memory can, furthermore, be taken into account in a manner which is efficient in terms of computation, if the values of the metrics table in each case comprise the logarithm of the conditional likelihoods for the possible channel states, which results from a finite number of most recently transmitted symbols.

In one particularly preferred embodiment, the values in the metrics table become the conditional likelihoods, which in each case cover the likelihood of the occurrence of a received value, subject to the condition that the channel is in a specific state, and with this conditional likelihood being obtained by counting the received subsequent values from the estimation sequence of estimated channel states.

In one advantageous embodiment, a state in each case corresponds to a digital interval of the digital/analogue transducer, and an element in the metrics table corresponds to the logarithm of the conditional likelihood. In consequence, multiplication operations of likelihoods, which are advantageous in terms of data processing, can be expressed as the addition of their metrics values.

Major advantages result if the conditional likelihoods are obtained by counting the events in that a received value occurs when the channel is in a state which is obtained from the estimation sequence (â) since, in this case, even a simple memory module can store these values as matrix elements or, in processed form, as elements in a metrics table. Furthermore, if, after completion of a measurement interval, the likelihood is normalized by forming the ratio with the total number of received values which have occurred for each channel state, the pure numerical values obtained in this way themselves represent the respective conditional likelihoods.

Dynamic adaptation is advantageously made possible by the elements in the metrics table being updated on the basis of the received value sequences.

This concept can be advantageously implemented by means of a data estimator to which the associated value set from the metrics table is supplied and which in each case assigns a most likely value of an estimation sequence to the supplied value set and supplies an output signal to a discrete channel estimator which signal describes the estimated channel state.

In this case, the output signals can advantageously be used for continuous calculation of the metrics table values in the discrete channel estimator, on the basis of histogram values of the conditional likelihoods.

If the time correlations of those elements of interference or nonlinear effects which are subject to memory act for a longer time than the duration of only one transmitted symbol, the metrics table values may each be associated with more than one previous state change, in this case resulting in corresponding multiplication of the matrix elements of the numerical values and of the elements in the metrics table. In this context, reference is also made to the article by A. Kavcic, J. Moura, The Viterbi Algorithm and Markov Noise Memory, IEEE Trans. Information Theory, Vol. 46, No. 1, Jan. 2000 pp. 291-300 whose contents are incorporated completely here by reference.

The invention will be described in more detail in the following text using the attached drawings and with reference to preferred embodiments.

Brief description of the figures

| Figure 1 | shows a typical optical transmission path in which the invention can be used, |
| Figure 2 | shows an eye diagram of a signal received from an optical transmission path essentially without any interference, in particular the transmission path shown in Figure 1, |
| Figures 3a and b | show the comparison of the electrical implementation of a conventional detector and of the receiver structure according to the invention, |
| Figure 4 | shows the quantization characteristic of a quantizer, in particular of an analogue/digital transducer (ADC), |
| Figure 5 | shows a block diagram of the assemblies of the receiver structure from Figure 3b, |
| Figure 6 | shows the transition from numerical values of the respective conditional likelihoods for a quantized or, in particular, digital value for an estimated channel state to metrics values which indicate, |

in particular, the logarithm of the respective conditional likelihood,

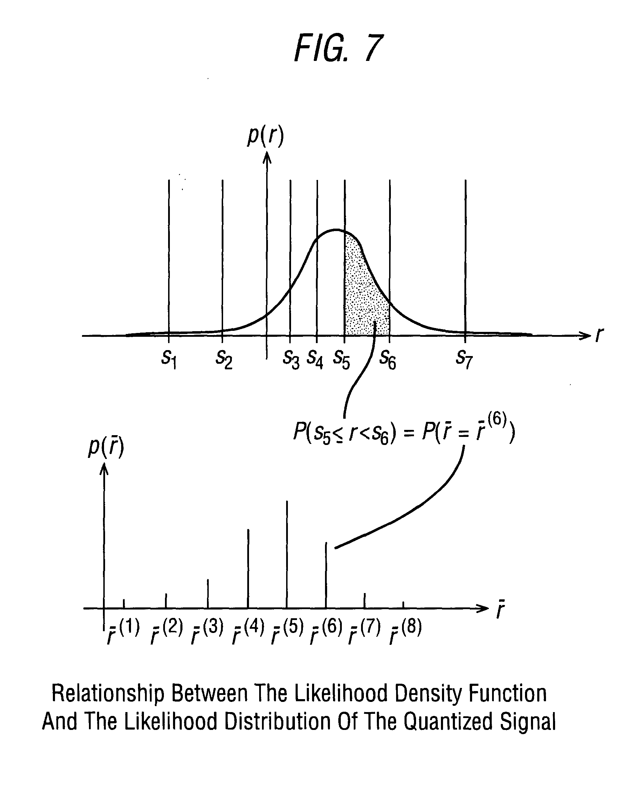

Figure 7          shows the relationship between the likelihood density function and the likelihood distribution of the quantized or digitized signal.

### Detailed description of preferred embodiments

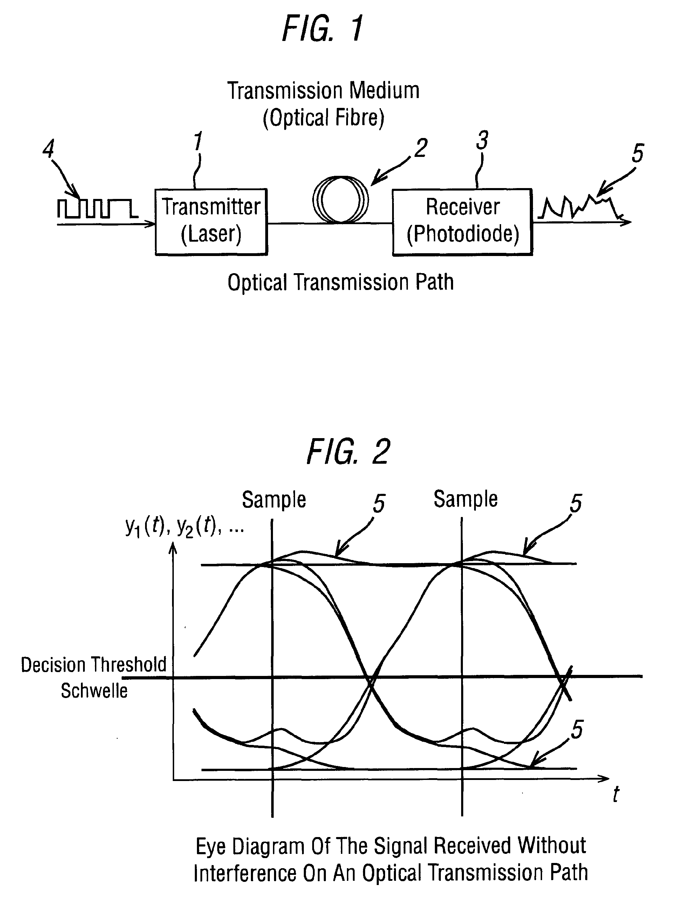

In the simplest case, an optical transmission system comprises three basic units (illustrated by way of example in Figure 1), a transmitter 1, a transmission medium 2 and a receiver 3. A semiconductor laser whose light intensity is modulated with an electrical signal is preferably used for the transmitter 1.

Various types of optical fibre may be used as the transmission medium 2, in particular such as monomode fibres, gradient fibres and the like, which allow propagation guided in the form of waveguides for the electromagnetic waves. Commercial systems normally use photodiodes for detection of the optical signals, and these supply a current which is largely proportional to the optical power.

The task of subsequent detectors is, in general, to reconstruct the original digital data stream 4 with as few errors as possible from the electrical signal 5.

By way of example, Figure 2 shows the electrical received signals 5, in each case shifted by an integer multiple of a bit interval T and superimposed, of a typical optical transmission path (eye diagram).

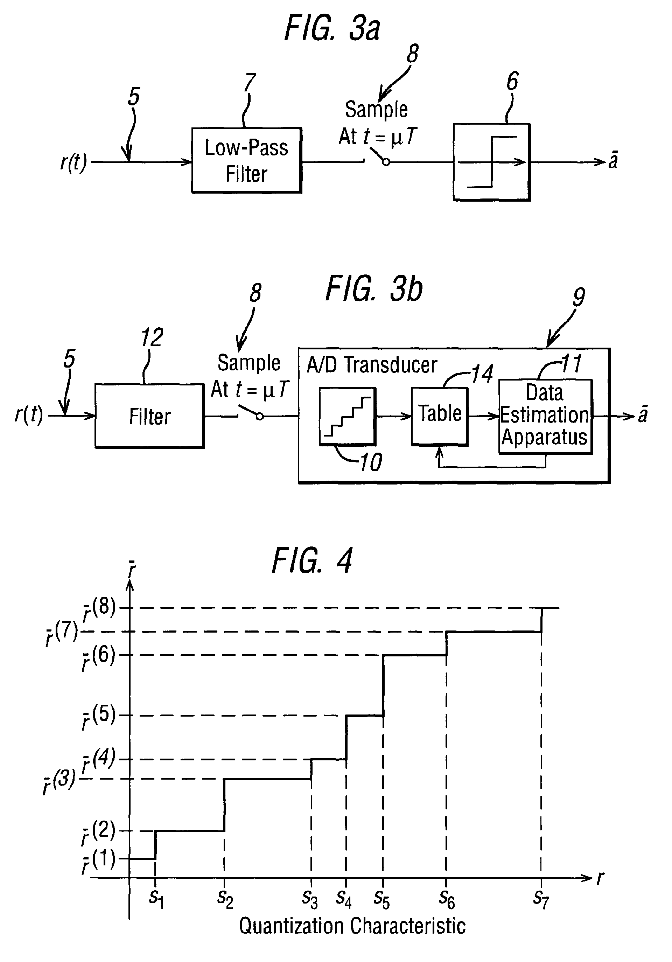

In conventional systems, the electrical signal 5 is sampled at equidistant intervals, corresponding to one bit interval, and is supplied to a simple threshold-value decision maker 6, illustrated by way of example in Figure 3a. A "1" or a "0" is detected as part of a signal sequence â depending on whether the signal is above or below the decision threshold at the sampling time.

The invention is based on the new receiver structure described in the following text and illustrated by way of example in Figure 3b.

While conventional detectors, as illustrated in Figure 3a, essentially comprise only a low-pass filter 7 and a threshold-value decision maker 6, together with a device for samples 8 taken at discrete times, the estimation apparatus 9 according to the invention provides a receiver structure with time quantization by means of the sampler 8 and value quantization by means of a quantizer 10, in particular an A/D transducer 10 and a downstream data estimation apparatus 11.

The electrically preprocessed signal 5 received by the photodiode 3 is supplied to a filter 12 and is sampled by the sampler 8 in time with the symbols. The continuous analogue signal downstream from the filter 12 is converted into a digital signal by means of the analogue/digital transducer 10. The output of the A/D transducer 10 supplies the data estimation apparatus 11 with a discrete value from a set of a finite number of quantized or digitized values, which are associated with the occurrence of a specific event, for example as the event 1: "the sampled value is between threshold $4^-$ and 5".

The estimation apparatus according to the invention now tries to reconstruct the transmitted bit sequence 4 as well as possible from the sampled and quantized values.

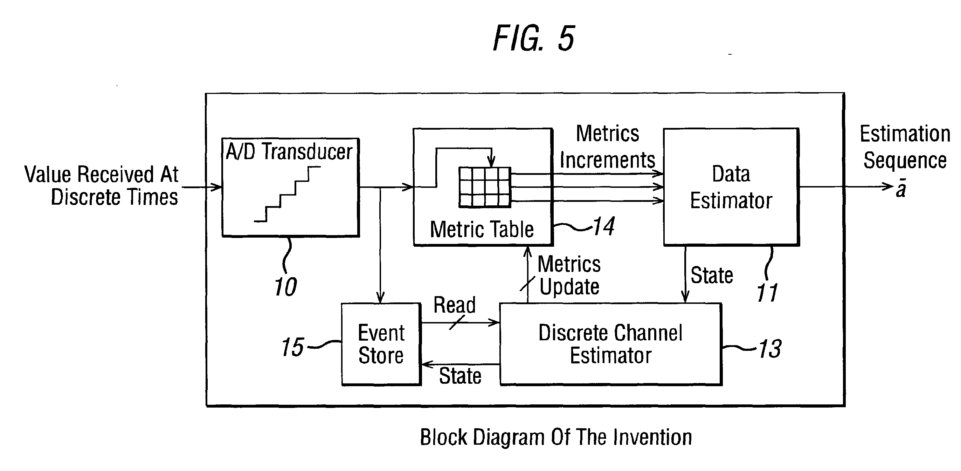

This object has been achieved by inventing an estimation apparatus which also includes an estimation device for channel estimation 13, see for example Figure 5, which, on the basis of information arriving from the A/D transducer 10, adaptively adjusts itself to any desired nonlinear channels, non-Gaussian interference and the natural characteristics of the A/D transducer 10 or other imperfections, and compensates for or corrects them as far as possible, and, in particular in conjunction with the estimated channel, carries out an estimation of the transmitted bit sequence 4 in such a manner that the error likelihood in the estimation sequence â is as small as possible.

The invention thus covers two of the previously mentioned problem areas: firstly, static nonlinearities and dynamic nonlinearities which are dependent on the bit sequence from the A/D transducer 10 are taken into account and thus compensated for. Secondly, both the resultant conditional inference likelihood densities, which are dependent on the bit sequence, and the nonlinear channel model for the probabilistic sequence estimator, are estimated including any required unique characteristic, which is necessarily known, of the A/D transducer while data transmission is taking place.

Based on the simple model of a quantizer which, in this case, is also regarded as the most general form of a digitizer or A/D transducer, one important aspect of the present estimation apparatus will be explained in more detail in the following text.

The quantizer provides a function which assigns elements in a finite set to the continuous, real input values. If r denotes the input value and ? denotes the output value of the quantizer, then

Equation 1         $$Q : r \in R \rightarrow Q(r) = \bar{r} \in \{\bar{r}^{(1)}, \bar{r}^{(2)}, ..., \bar{r}^{(p)}\}$$

Each input value r ∈ R has only one associated output value

$$\tilde{r} \in \{\tilde{r}^{(1)}, \tilde{r}^{(2)}, \ldots, \tilde{r}^{(p)}\}.$$

The definition range, which in this case covers the set of real numbers, is therefore subdivided into disjunctive intervals, and each interval is assigned an applicable function value $\tilde{r}^{(i)}$. Normally, the number of intervals exactly corresponds to the power of the value set. The limits between the intervals are denoted as thresholds.

Figure 4 shows an example of a quantization function graphically, in the form of a characteristic.

The actual estimation of the transmitted data sequence is based on an apparatus which estimates the state sequence of a channel modelled as an automatic system on the basis of theoretical likelihood considerations, and uses this to determine the most probably transmitted symbol sequence â.

To do this, the data estimator 11 requires so-called metrics increments which are shown, by way of example, in Figure 7 as elements "1" in a metrics table 14 and which are related to the conditional likelihood of a specific analogue/digital converted value and of a channel state, and in consequence are related to the interference likelihood density.

One aspect of the present invention is based on obtaining the required metric increments "1" on the basis of channel-state-dependent observation of the information supplied from the quantizer 10. To do this, the events are counted as a function of the states, and the overall required statistical characteristics of the channel can be derived from this. The metrics increments are stored in a table 14, and the number of events is stored in a store 15, which is likewise shown by way of example in Figure 7. Table 14 for the metrics increments "1" is connected directly downstream from the A/D transducer 10, as can also be seen in Figure 5.

The channel model used in US Patent 5,131,011 generates the possible channel output signals, as a function of the state, in the absence of noise, and the channel estimation method also adaptively determines the noise-free potential output signals. However, this method cannot be used for optimum consequence estimation for non-Gaussian, state-dependent noise. For this reason, the branch metrics Table 14 for the channel model of the invention contains the complete stochastic characteristics of the channel from the point of view of the assessment apparatus, which characteristics are determined adaptively.

Theory of an optimum estimator (MLSE) for quantized signals

The following text describes the theoretical principles of optimum estimation taking account of an A/D transducer and this estimation forms the basis for the inventive solution to the problem of an optimum estimator.

The quantizer or A/D transducer provides a function which assigns elements in a finite set to the continuous, real input values. If r denotes the input value of the quantizer and $\tilde{r}$ the output value, then reference is made to equation 1, in which case this functional definition includes the requirement for uniqueness, that is to say each input value r ε R has only a single associated output value

$$\tilde{r} \in \{\tilde{r}^{(1)},$$

$$\tilde{r}^{(2)}, \ldots, \tilde{r}^{(p)}\}.$$

The definition range (in this case the set of real numbers) is thus subdivided into disjunctive intervals, and each interval is assigned an associated valid function value $\tilde{r}^{(i)}$. Normally, the number of intervals just corresponds to the power P of the value set. The limits between the intervals $[s_{i\text{-}}1, s_i]$ with which the values $\tilde{r}^{(i)}$ are associated, are referred to as thresholds.

If $\tilde{r}$ denotes the vector of the quantized samples, then, on the assumption that successive samples are statistically independent, the expression for the maximum likelihood sequence estimator is:

Equation 2

$$\tilde{a} = \arg\left\{\max_{b}(p(\bar{r}|b))\right\}$$

$$= \arg\left\{\max_{b}\left(\prod_{\mu} p(\bar{r}_{\mu}|b)\right)\right\}$$

Since the random variables $\tilde{r}_{\mu}$ can assume only a finite number of discrete values, the conditional likelihood density function consists of weighted delta pulses. The a priori likelihood P($\tilde{r}_{\mu}$|b) of the occurrence of a specific output value from the quanitizer is therefore used instead of the density function. If it is also assumed that the value $r_{\mu}$ sampled at the discrete time depends only on the L previously transmitted symbols (finite memory), then:

Equation 3

$$\hat{a} = \arg\left\{\max_{b}\left(\prod_{\mu} P(\bar{r}_{\mu}|(b_{\mu}, b_{\mu-1}, \ldots, b_{\mu-L}))\right)\right\}$$

$$= \arg\left\{\max_{b}\left(\sum_{\mu} \log P(\bar{r}_{\mu}|z_{\mu})\right)\right\}$$

$$= \arg\left\{\max_{b}\left(\sum_{\mu} l(\bar{r}_{\mu}, z_{\mu})\right)\right\}$$

Since both the variable $\tilde{r}_{\mu}$ and $Z_{\mu}$ can assume only a finite number of different values, the individual branch metrics or elements of the metrics Table 14 can store 1($\tilde{r}_{\mu}$, $Z_{\mu}$) in a table, which is highly conducive to the hardware implementation, since this Table 14 can be in the form of a store.

A priori likelihood P($\tilde{r}_{\mu}$|$Z_{\mu}$) can easily be determined exactly from the a priori density function p($\tilde{r}_{\mu}$|$Z_{\mu}$) of the signal with continuous values. In this case:

Equation 4

$$P(\bar{r}_{\mu}|z_{\mu}) = P(\bar{r}^{(i)}|z^{(k)})\Big|_{\bar{r}_{\mu}=\bar{r}^{(i)}, z_{\mu}=z^{(k)}} = P(s_{i-1} < r \le s_i|z^{(k)})$$

$$= \int_{s_{i-1}}^{s_i} p(r|z^{(k)}) dr$$

This means that the a priori likelihood for a specific event corresponds exactly to the area of the a priori likelihood density function between the two associated thresholds, as is shown in Figure 7, which explains the relationship between the likelihood density function and the likelihood distribution of the quantized signal.

In consequence, the variables P($\tilde{r}_{\mu}$|$Z_{\mu}$) required for the optimum estimator can, in a practical implementation, be obtained by measuring the relative frequency, which corresponds to the number of events related to the total number of measurements, with which the samples $r_{\mu}$ lie in an interval $S_{i-1} < r_{\mu} < S_i$ for a specific channel state $Z^{(k)}$. However, the interval in which a sample lies is precisely the magnitude which a quantizer provides at its output. The digital quantizer output can therefore be used as the address of a memory cell, which is incremented by one for the relevant sample and the relevant state, and thus contains the number of events. After completion of a measurement cycle, the frequency distribution for each state $Z^{(k)}$ can be deduced from the total number of samples and the memory contents. Since likelihoods in logarithmic form are generally used for calculation purposes, the required branch metrics are obtained by taking logarithms of the frequency values.

The metrics Table 14, which may also be referred to as a branch metrics table, thus contains those metric increments which can be used directly for a Viterbi algorithm (VA) in the data estimation apparatus 11. The application of the Viterbi algorithm to the values in the metrics Table 14 is well known to persons skilled in the art, and does not require any further explanation at this point.

Theoretically, it is also possible to verify that these metrics increments or elements in the metrics table are expediently the logarithms of the conditional likelihoods of the respective transitions $1(\tilde{r}_\mu| z_\mu) =- \log P(\tilde{r}_\mu| z_\mu)$. This Table 14 may be implemented by one or more random access memories, in which case the quantized signal then represents the respective address.

### Channel estimator

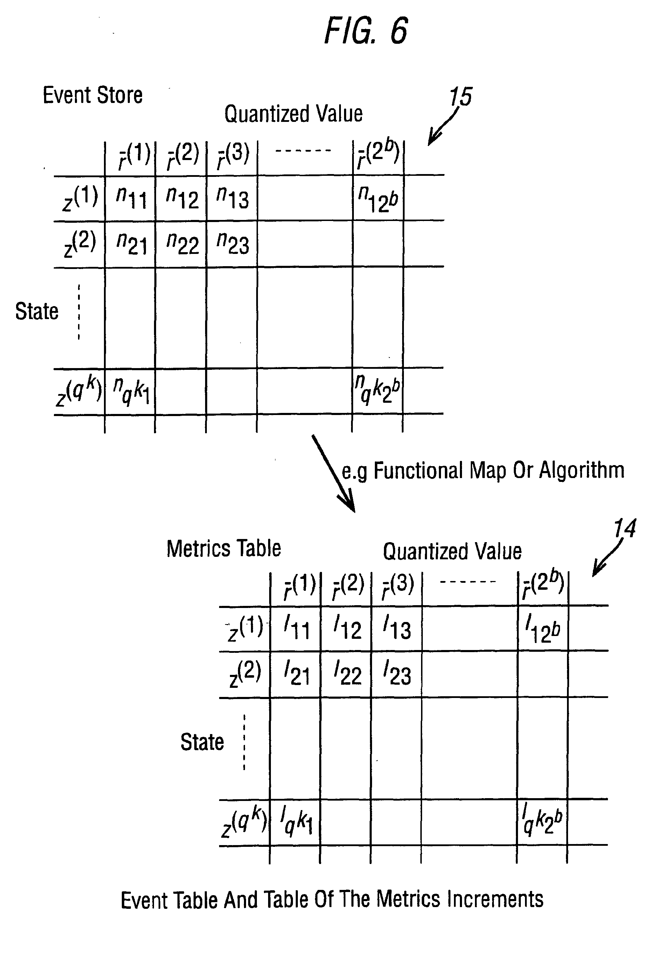

The channel estimator 13 has the task of estimating the required conditional likelihoods. The channel estimator comprises a delay element for the quantized signal $\tilde{r}_\mu$, a shift register for determining the channel state, and a table for counting the events, and the latter is represented as Table 15 in Figure 6. This Table 15 may be implemented by one or more random access memories, in which case the quantized and delayed signal and the associated estimated state represent the address. The respectively addressed memory cell is incremented by one per symbol clock cycle, so that event counting takes place and a histogram is thus formed for each state.

If N denotes the number of events per state $\hat{z}^{(i)}$ and it is assumed that $H(\hat{z}^{(i)}, \tilde{r}^{(j)})=H(i,j)$ is the content of the memory cell of state $\hat{z}^{(i)}$ and quantized value $\tilde{r}^{(j)}$, then:

```
Equation 5
P(r̃ µ | zµ) = lim(1/N · H(i,j))., as N tends to infinity.
```

This means that, provided N is sufficiently large, the event counting carried out results virtually directly in the conditional likelihood, which is found once again in the expression in the branch metrics for the optimum sequence estimator.

In order to prevent memory overflows, the memory may be normalized at regular intervals (algorithm, page 5).

### Branch metrics calculation (BMC)

The branch metrics are calculated in the block BMC from the histogram $H(i,j)$. To do this, logarithms are taken of the individual memory contents $H(i,j)$ in the event store 15:

$$\text{Equation 6}$$

$$BM(i,j) = -\ln(H(i,j))$$

The elements of the metrics Table 14 obtained in this way are then, as is shown by way of example in Figure 5, transferred by the discrete channel estimator 13 to the metrics Table 14.

However, it should be remembered that the number of events per state $\hat{z}^{(i)}$ and quantized value $\tilde{r}^{(j)}$ may be very small or zero. For this reason, adaptation algorithms which are known to persons skilled in the art are used to prevent poles from occurring while taking logarithms.

It is furthermore within the scope of the invention to transmit pilot data or test data first of all before signal transmission starts, which data are distributed statistically or randomly over the various channel states by means of a scrambler or other suitable devices, and to offer the capability to set the estimation apparatus optimally during a test period for it. Such pilot data or test data can, furthermore, be transmitted regularly or as a function of any interference that occurs.

### Claims

1. Estimation apparatus in particular having a channel estimator (13) for estimating characteristics of a transmission channel, in which case the transmission channel is subject to interference, and in which the analogue data (5) received from the transmission channel is assigned an estimator sequence (â) of digital data values in particular by means of a data estimator (11),

which is **characterized**

**in that** the estimator apparatus produces at least one estimation sequence (â) whose estimation includes both characteristics of the transmission channel and characteristics of the receiver.

2. Estimation apparatus according to Claim 1, in which the analogue input signal (5) is preferably filtered and is analogue/digital converted as a preferably filtered signal r, and the analogue/digital converted value $\tilde{r}$ is assigned a value ($l_{i,j}$) from a metrics table (14).

3. Estimation apparatus according to Claim 2, in which the values in an event table (15) each comprise the number of occurrences of a specific analogue/digital converted value $\tilde{r}_\mu$ in a state ($z_\mu$) of the transmission channel.

4. Estimation apparatus according to Claim 3, in which the state per analogue converted value is obtained from the estimation sequence â of the data estimation apparatus (11).

5. Estimation apparatus according to Claim 4, in which the conditional likelihood $P(\tilde{r}_\mu \| z_\mu)$ of the occurrence of the analogue/digital converted value $\tilde{r}_\mu$ for a state $z_\mu$ of the transmission channel is obtained from the event table (15).

6. Estimation apparatus according to Claim 5, in which one element in the metrics table (14) corresponds to the logarithm of the conditional likelihood $P(\tilde{r}_\mu \| z_\mu)$ of the occurrence of a specific analogue/digital converted value $\tilde{r}_\mu$ in state $z_\mu$ of the transmission channel.

7. Estimation apparatus according to one of Claims 2 to 5, in which the conditional likelihood $P(\tilde{r}_\mu | z_\mu)$ of occurrence of a specific analogue/digital converted value $\tilde{r}_\mu$ in a state of the transmission channel after completion of a measurement interval is normalized by forming the ratio with the total number of events N which have occurred for this state.

8. Estimation apparatus according to one of Claims 2 to 7, in which the elements of the metrics table (14) are updated on the basis of the estimation sequences (â) obtained and the analogue/digital converted values.

9. Estimation apparatus according to one of Claims 2 to 8, in which the data estimator (11) is supplied with the associated value set $l_{i,j}$ from the metrics table (14), and which in each case assigns a most likely value of an estimation sequence (â) to the supplied value set $l_{i,j}$ and supplies an output signal to the discrete channel estimator (13), from which the channel estimator (13) determines the state of the transmission channel $z_\mu$.

10. Estimation apparatus according to Claim 9, in which histogram values are obtained from the elements of the event table (15) and are used to carry out continuous calculation of the values of the metrics table (14).

11. Estimation apparatus according to one of the preceding claims 2 to 10, in which the values in the metrics table (14) are each associated with more than one digital/analogue converted value.

12. Receiver for receiving data transmitted by means of a transmission channel, **characterized by** an estimation apparatus according to one of the preceding claims.

13. Receiver according to Claim 12, further **characterized by** a filter 12 and a sampler 8.

14. System for transmitting data **characterized by** a receiver according to Claim 12 and an estimation apparatus according to one of the preceding claims 1 to 11.

# FIG. 1

Transmission Medium
(Optical Fibre)

Optical Transmision Path

# FIG. 2

Eye Diagram Of The Signal Received Without
Interference On An Optical Transmission Path

## FIG. 3a

$r(t) \longrightarrow$ 5 | 7 Low-Pass Filter | Sample At $t = \mu T$  8 | 6 | $\longrightarrow \bar{a}$

## FIG. 3b

$r(t) \longrightarrow$ 5 | 12 Filter | Sample At $t = \mu T$  8 | A/D Transducer  9 — 10 — 14 Table — 11 Data Estimation Apparatus | $\longrightarrow \bar{a}$

## FIG. 4

Quantization Characteristic

## FIG. 5

Block Diagram Of The Invention

EP 1 139 619 A1

# FIG. 6

Event Store

Quantized Value  *15*

| | $\bar{r}(1)$ | $\bar{r}(2)$ | $\bar{r}(3)$ | - - - - - - | $\bar{r}(2^b)$ | |
|---|---|---|---|---|---|---|
| $z(1)$ | $n_{11}$ | $n_{12}$ | $n_{13}$ | | $n_{12^b}$ | |
| $z(2)$ | $n_{21}$ | $n_{22}$ | $n_{23}$ | | | |
| State | | | | | | |
| $z(q^k)$ | $n_{q^k_1}$ | | | | $n_{q^k_{2^b}}$ | |

e.g Functional Map Or Algorithm

Metrics Table

Quantized Value  *14*

| | $\bar{r}(1)$ | $\bar{r}(2)$ | $\bar{r}(3)$ | - - - - - - | $\bar{r}(2^b)$ | |
|---|---|---|---|---|---|---|
| $z(1)$ | $l_{11}$ | $l_{12}$ | $l_{13}$ | | $l_{12^b}$ | |
| $z(2)$ | $l_{21}$ | $l_{22}$ | $l_{23}$ | | | |
| State | | | | | | |
| $z(q^k)$ | $l_{q^k_1}$ | | | | $l_{q^k_{2^b}}$ | |

Event Table And Table Of The Metrics Increments

## FIG. 7

Relationship Between The Likelihood Density Function
And The Likelihood Distribution Of The Quantized Signal

EP 1 139 619 A1

**European Patent Office**

**EUROPEAN SEARCH REPORT**

Application Number

EP 00 31 1162

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 887 027 A (COHEN HERBERT B ET AL) 23 March 1999 (1999-03-23) * abstract * * column 1, line 26 - line 29 * * column 2, line 24 - line 37 * | 1,12-14 | H04L25/02 |
| A | US 5 432 821 A (RAHELI RICCARDO ET AL) 11 July 1995 (1995-07-11) * abstract; figure 14 * * column 5, line 14 - line 18 * * column 11, line 38 - line 41 * * column 12, line 42 - line 52 * * column 13, line 30 - line 60 * | 1-5,8-10 | |
| A | HIROSHI KUBO ET AL: "AN ADAPTIVE MAXIMUM-LIKELIHOOD SEQUENCE ESTIMATOR FOR FAST TIME-VARYING INTERSYMBOL INTERFERENCE CHANNELS" IEEE TRANSACTIONS ON COMMUNICATIONS,US,IEEE INC. NEW YORK, vol. 42, no. 2/03/04, 1 February 1994 (1994-02-01), pages 1872-1880, XP000447401 ISSN: 0090-6778 * figure 4 * * page 1875, left-hand column, line 24 - line 36 * * page 1876, left-hand column, line 24 - line 30 * | 1-5,8-10 | |

TECHNICAL FIELDS SEARCHED (Int.Cl.7)

H04L

The present search report has been drawn up for all claims

| Place of search | Date of completion of the search | Examiner |
|---|---|---|
| THE HAGUE | 2 July 2001 | Papantoniou, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

14

## ANNEX TO THE EUROPEAN SEARCH REPORT
## ON EUROPEAN PATENT APPLICATION NO.

EP 00 31 1162

This annex lists the patent family members relating to the patent documents cited in the above-mentioned European search report.
The members are as contained in the European Patent Office EDP file on
The European Patent Office is in no way liable for these particulars which are merely given for the purpose of information.

02-07-2001

| Patent document cited in search report | Publication date | Patent family member(s) | Publication date |
|---|---|---|---|
| US 5887027 A | 23-03-1999 | EP 0930750 A<br>JP 11266186 A<br>TW 406486 B | 21-07-1999<br>28-09-1999<br>21-09-2000 |
| US 5432821 A | 11-07-1995 | NONE | |

EPO FORM P0459

For more details about this annex : see Official Journal of the European Patent Office, No. 12/82